# EUROPEAN PATENT SPECIFICATION

(11) **EP 2 680 533 B1**
(45) Date of publication and mention of the grant of the patent: **08.11.2017**
(21) Application number: 11762024.5
(22) Date of filing: 28.04.2011
(51) Int. Cl.: H04L 29/08

(54) **CONTENT ACQUIRING METHOD AND CLIENT BASED ON HTTP**
INHALTSABRUFSVERFAHREN UND CLIENT AUF DER BASIS VON HTTP
PROCÉDÉ D'ACQUISITION DE CONTENU, ET CLIENT À BASE DE HTTP

(43) Date of publication of application: 01.01.2014
(73) Proprietor: Huawei Device Co., Ltd., Shenzhen, Guangdong 518129 (CN)
(72) Inventor: ZHANG, Haoran, Shenzhen Guangdong 518129 (CN)
(74) Representative: Pfenning, Meinig & Partner mbB
(86) International application number: PCT/CN2011/073455
(87) International publication number: WO 2011/120450

(56) References cited:
- WO-A1-2007/009255
- CN-A- 101 335 762
- CN-A- 101 383 036
- KR-A- 20040 065 413
- US-A1- 2011 029 641
- US-B1- 7 343 412

## Description

### TECHNICAL FIELD

Embodiments of the present invention relate to communication technologies, and in particular, to a HyperText Transfer Protocol (HyperText Transfer Protocol, HTTP for short)-based content acquisition method and client.

### BACKGROUND

Before a client on a terminal requests, through a HyperText Transfer Protocol (HyperText Transfer Protocol, HTTP for short), to acquire a content from a server, the client may first check whether the requested content exists in a cache. If the content exists in the cache, the client acquires the content and a validity period of the content from the cache first. If the client determines that the content is valid according to the validity period of the content, the client may display the content directly; if the client determines that the content is invalid according to the validity period of the content, the client requests a server to verify validity of the content; if the validity verification performed by the server for the content fails, the client requests to acquire a corresponding new content from the server; if the validity verification performed by the server for the content succeeds, the server returns confirmation information to the client so that the client displays the content directly. US 2011029641 A1 discloses that the cache in browsers operates in two ways. In a first aspect of operation, once a resource is loaded to the browser, the resource may include a period of time of the time of the expiry of the cache. One the cache expires, the resource is deleted from the cache and the next time the browser needs the resource, the browser sends a request to get the resource. In a second aspect of operation, once a resource's time in the browser's cache is expired, and the browser needs the resource, the browser sends a request to the web server along with some information about the resource that it has in its cache. Then the server may return, instead of the content of the request a message confirming that the existing resource that is up to date and may be used.

When the server verifies a content that continues to be valid, the verification causes a delay in displaying the content on the client , and therefore reduces the display efficiency of the client.

### SUMMARY

Embodiments of the present invention provide an HTTP-based content acquisition method and client to improve display efficiency of a client.

An embodiment of the present invention provides an HTTP-based content acquisition method, including:
acquiring, by a client according to an acquired content identifier, a first content corresponding to the content identifier and a validity period of the first content from a cache;
displaying, by the client, the first content;
if a duration of caching the first content on the client exceeds the validity period, requesting, by the client, a server to verify validity of the first content while the first content is displayed;
requesting, by the client, to acquire a second content corresponding to the content identifier from the server if the validity verification performed by the server for the first content fails; and
displaying, by the client, the second content.

An embodiment of the present invention provides another HTTP-based content acquisition method, including:
acquiring, by a client, a fourth content;
displaying, by the client, the fourth content; and
acquiring, by the client according to a content identifier included in the fourth content, a fifth content corresponding to the content identifier after a preset time interval.

An embodiment of the present invention further provides a client, including:
a first acquiring module, configured to acquire, according to an acquired content identifier, a first content corresponding to the content identifier and a validity period of the first content from a cache;
a first displaying module, configured to display the first content;
a verification requesting module, configured to request, if a duration of caching the first content on the client exceeds the validity period, a server to verify validity of the first content while the first content is displayed by the first displaying module;
a second acquiring module, configured to request to acquire a second content corresponding to the content identifier from the server if the validity verification performed by the server for the first content fails; and
a second displaying module, configured to display the second content.

An embodiment of the present invention further provides another client, including:
a first acquiring module, configured to acquire a first content;
a content displaying module, configured to display the first content; and
a second acquiring module, configured to acquire, according to a content identifier included in the first content, a second content corresponding to the content identifier after a preset time interval.

As may be known from the above technical solutions, the embodiments of the present invention can reduce the delay in displaying the content on the client, and therefore improve the display efficiency of the client.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of an HTTP-based content acquisition method according to an embodiment of the present invention;
FIG. 2 is a schematic flowchart of another HTTP-based content acquisition method according to another embodiment of the present invention;
FIG. 3 is a schematic structural diagram of a client according to another embodiment of the present invention; and
FIG. 4 is a schematic structural diagram of another client according to another embodiment of the present invention.

### DESCRIPTION OF EMBODIMENTS

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

It should be noted that terminals involved in the embodiments of the present invention include but are not limited to a mobile phone, a personal digital assistant (Personal Digital Assistant, PDA for short), a wireless handheld device, a wireless netbook, a portable computer, an MP3 player, an MP4 player, and so on.

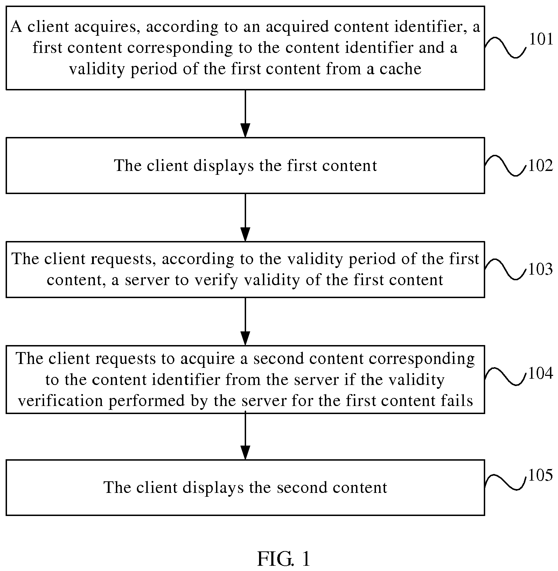

FIG. 1 is a schematic flowchart of an HTTP-based content acquisition method according to an embodiment of the present invention. As shown in FIG. 1, the HTTP-based content acquisition method in this embodiment may include the following steps:
Step 101: A client acquires, according to an acquired content identifier, a first content corresponding to the content identifier and a validity period of the first content from a cache.

The content identifier is acquired by the client from content-related information input by a user through an input device. For example, the user inputs a web address through a keyboard, and therefore, the client acquires the web address as a content identifier; for another example, the user clicks a web page name in favorites through a mouse, and therefore, the client acquires the web address corresponding to the web page name as a content identifier.

Specifically, the client may acquire, according to the acquired content identifier, the first content corresponding to the content identifier and a validity period identifier of the first content from the cache, and therefore, may acquire, according to the validity period identifier of the first content, a validity period corresponding to the validity period identifier of the first content; or, the client may acquire, according to the acquired content identifier, the first content corresponding to the content identifier but no validity period identifier of the first content from the cache, and therefore, may use a preset validity period, for example, 0, as the validity period of the first content.

Step 102: The client displays the first content.

Specifically, the client may display the first content according to characteristic information of the first content. The characteristic information of the first content may include but is not limited to the type of the content and keywords of the content. For example, if the characteristic information of the first content is a content type such as image and fiction, the client may display the first content; if the characteristic information of the first content is a content type such as news and forum, the client may give up displaying the first content; if the characteristic information of the first content is a content keyword such as registration and verification code, the client may give up displaying the first content.

Step 103: The client requests, according to the validity period of the first content, a server to verify validity of the first content.

Specifically, if the duration of caching the first content on the client exceeds the validity period, the client may request the server to verify validity of the first content.

Understandably, if the client determines that the content is valid according to the validity period of the first content, the client does not need to request the server to verify validity of the first content.

Step 104: The client requests to acquire a second content corresponding to the content identifier from the server if the validity verification performed by the server for the first content fails.

Understandably, although the validity verification performed by the server for the first content fails, it is still possible that the second content requested and acquired by the client is exactly the same as the first content.

Step 105: The client displays the second content.

Specifically, if the second content is exactly the same as the first content, the client may give up displaying the second content (but continue displaying the first content), or may further display the second content; if the second content is different from the first content, the client may display the second content.

It should be noted that if the validity verification performed by the server for the first content succeeds, the client continues displaying the first content, and the process of this embodiment ends immediately; if the validity verification performed by the server for the first content fails, the client continues to perform steps 104 and 105 before the process of this embodiment ends.

In this embodiment, step 102 and step 103 are in no particular order, and this embodiment does not limit the implementation order.

In this embodiment, after acquiring the content identifier, the client displays the first content directly no matter whether the first content corresponding to the content identifier in the cache is valid. Moreover, while the first content is displayed, the cache is verified; if the cache is valid, no step needs to be performed, and the first content is still displayed. If the cache needs to be verified by a network-side server, the server may be requested to perform verification: If the cache is valid, no step needs to be performed, and the first content is still displayed; if the cache has expired, a second content (the updated first content) is re-acquired from the server.

In this embodiment, through a client acquires, according to an acquired content identifier, a first content corresponding to the content identifier and a validity period of the first content from a cache, and displays the first content. Meanwhile, according to the validity period of the first content, the client requests a server to verify validity of the first content. If the validity verification performed by the server for the first content succeeds, the client may continue displaying the current first content, thereby avoiding the problem that the client does not display the content until the validity verification performed by the server for the content in the cache succeeds in the prior art, reducing the delay in displaying the content on the client, and improving display efficiency of the client.

After step 102, the client may further re-acquire the first content corresponding to the content identifier after a preset time interval, and display the re-acquired first content. That is, after the preset time interval, the client performs a refresh operation automatically to acquire and display the updated first content. Specifically, if the re-acquired first content is exactly the same as the previously displayed first content, the client may give up displaying the re-acquired first content (but continue displaying the previously acquired first content), or may further display the re-acquired first content; if the re-acquired first content is different from the previously displayed first content, the client displays the re-acquired first content. In this way, the client performs a refresh operation automatically, and the user can still see the web page corresponding to the first content updated in real time, even if the user performs no operation on the web page corresponding to the first content for a long time, thereby avoiding the problem that the client can only re-acquire the content corresponding to the content identifier as triggered by a click operation of the user, reducing the delay in re-displaying (refreshing) the content on the client, and improving display efficiency of the client.

After step 104, the client may further re-acquire the second content corresponding to the content identifier after a preset time interval, and display the re-acquired second content. After the preset time interval, the client performs a refresh operation automatically to acquire and display the updated second content. Specifically, if the re-acquired second content is exactly the same as the previously displayed second content, the client may give up displaying the re-acquired second content (but continue displaying the previously acquired second content), or may further display the re-acquired second content; if the re-acquired second content is different from the previously displayed second content, the client displays the re-acquired second content. In this way, the client performs a refresh operation automatically, and the user can still see the web page corresponding to the second content updated in real time, even if the user performs no operation on the web page corresponding to the second content for a long time, thereby avoiding the problem that the client can only re-acquire the content corresponding to the content identifier as triggered by a click operation of the user, reducing the delay in re-displaying (refreshing) the content on the client, and improving display efficiency of the client.

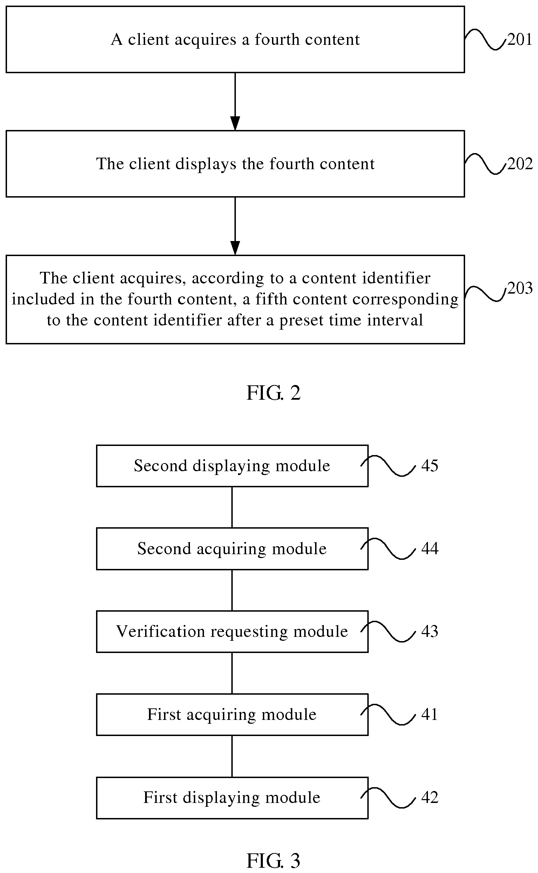

FIG. 2 is a schematic flowchart of another HTTP-based content acquisition method according to another embodiment of the present invention. As shown in FIG. 2, the HTTP-based content acquisition method in this embodiment may include the following steps:
Step 201: A client acquires a fourth content.
Step 202: The client displays the fourth content.
Step 203: The client acquires, according to a content identifier included in the fourth content, a fifth content corresponding to the content identifier after a preset time interval.

The fourth content may include multiple content identifiers, for example, a content identifier corresponding to a link label (such as a homepage link label, an entertainment link label, a real estate link label, and so on), a content identifier corresponding to a function control (such as a next-page function control (Next), a return function control (Back)), and so on.

In this way, if the client subsequently receives a command for displaying the fifth content as triggered by the user, the client may display the acquired fifth content directly.

Before this step, a step of acquiring, by the client, at least one content identifier included in the fourth content, may be included.

Optionally, the client may acquire, according to a function control in the fourth content, a content identifier corresponding to the function control, for example, a return function control (such as Back), and so on.

Optionally, the client may acquire, according to a link label in the fourth content, a content identifier corresponding to the link label, for example, a homepage link label, and so on.

In this embodiment, a client displays an acquired fourth content; after a preset time interval, the client may acquire, according to a content identifier included in the fourth content, a fifth content corresponding to the content identifier, thereby avoiding the problem that the client can only acquire the content corresponding to the content identifier according to the content identifier acquired as triggered by a click operation of the user, reducing the delay in displaying the content on the client, and improving display efficiency of the client.

It should be noted that, for brevity, the foregoing method embodiments are represented as a series of actions. However, persons skilled in the art should understand that the present invention is not limited to the order of the described actions, because according to the present invention, some steps may adopt other order or occur simultaneously. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

FIG. 3 is a schematic structural diagram of a client according to another embodiment of the present invention. As shown in FIG. 3, the client in this embodiment may include a first acquiring module 41, a first displaying module 42, a verification requesting module 43, a second acquiring module 44, and a second displaying module 45. The first acquiring module 41 is configured to acquire, according to an acquired content identifier, a first content corresponding to the content identifier and a validity period of the first content from a cache. The first displaying module 42 is configured to display the first content acquired by the first acquiring module 41. The verification requesting module 43 is configured to request, according to the validity period of the first content acquired by the first acquiring module 41, a server to verify validity of the first content. The second acquiring module 44 is configured to request to acquire a second content corresponding to the content identifier from the server if the validity verification performed by the server for the first content fails. The second displaying module 45 is configured to display the second content acquired by the second acquiring module 44.

The functions of the client in the embodiment corresponding to FIG. 1 may be implemented by the client provided in the embodiment of the present invention.

Optionally, the first acquiring module 41 in this embodiment may specifically acquire, according to the acquired content identifier, the first content corresponding to the content identifier and a validity period identifier of the first content from the cache, and acquire, according to the validity period identifier of the first content, a validity period corresponding to the validity period identifier of the first content.

Optionally, the first acquiring module 41 in this embodiment may further specifically acquire, according to the acquired content identifier, the first content corresponding to the content identifier from the cache, and use a preset validity period as the validity period of the first content.

Specifically, the verification requesting module 43 in this embodiment may specifically request the server to verify validity of the first content if the duration of caching the first content on the client exceeds the validity period.

Specifically, the first displaying module 42 in this embodiment may specifically display the first content according to characteristic information of the first content.

In this embodiment, a client acquires, through a first acquiring module according to an acquired content identifier, a first content corresponding to the content identifier and a validity period of the first content from a cache, and a first displaying module displays the first content. Meanwhile, according to the validity period of the first content, a verification requesting module requests a server to verify validity of the first content. If the validity verification performed by the server for the first content succeeds, the first displaying module may continue displaying the current first content, thereby avoiding the problem that the client does not display the content until the validity verification performed by the server for the content in the cache succeeds in the prior art, reducing the delay in displaying the content on the client, and improving display efficiency of the client.

Further, the first acquiring module 41 in this embodiment may further re-acquire the first content corresponding to the content identifier after a preset time interval. Correspondingly, the first displaying module 42 may further display the first content re-acquired by the first acquiring module 41. In this way, the client performs a refresh operation automatically, and the user can still see the web page corresponding to the first content updated in real time, even if the user performs no operation on the web page corresponding to the first content for a long time, thereby avoiding the problem that the client can only re-acquire the content corresponding to the content identifier as triggered by a click operation of the user, reducing the delay in re-displaying (refreshing) the content on the client, and improving display efficiency of the client.

Further, the second acquiring module 44 in this embodiment may further re-acquire a second content corresponding to the content identifier after a preset time interval. Correspondingly, the second displaying module 45 is further configured to display the second content re-acquired by the second acquiring module 44. In this way, the client performs a refresh operation automatically, and the user can still see the web page corresponding to the second content updated in real time, even if the user performs no operation on the web page corresponding to the second content for a long time, thereby avoiding the problem that the client can only re-acquire the content corresponding to the content identifier as triggered by a click operation of the user, reducing the delay in re-displaying (refreshing) the content on the client, and improving display efficiency of the client.

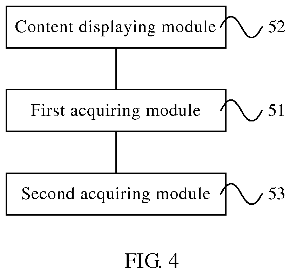

FIG. 4 is a schematic structural diagram of another client according to another embodiment of the present invention. As shown in FIG. 4, the client in this embodiment may include a first acquiring module 51, a content displaying module 52, and a second acquiring module 53. The first acquiring module 51 is configured to acquire a fourth content. The content displaying module 52 is configured to display the fourth content acquired by the first acquiring module 51. The second acquiring module 53 is configured to acquire, according to a content identifier included in the fourth content, a fifth content corresponding to the content identifier after a preset time interval.

The functions of the client in the embodiment corresponding to FIG. 2 may be implemented by the client provided in the embodiment of the present invention.

Further, the second acquiring module 53 in this embodiment may further acquire at least one content identifier included in the fourth content, which specifically includes: acquiring, according to a function control in the fourth content, a content identifier corresponding to the function control; or, acquiring, according to a link label in the fourth content, a content identifier corresponding to the link label.

In this embodiment, a client displays, through a content displaying module, a fourth content acquired by a first acquiring module; after a preset time interval, a second acquiring module may acquire, according to a content identifier included in the fourth content, a fifth content corresponding to the content identifier, thereby avoiding the problem that the client can only acquire the content corresponding to the content identifier according to the content identifier acquired as triggered by a click operation of the user, reducing the delay in displaying the content on the client, and improving display efficiency of the client.

Persons of ordinary skill in the art should understand that all or part of the steps of the methods in the embodiments may be implemented by a program instructing relevant hardware. The program may be stored in a computer readable storage medium. When the program is run, the steps of the methods in the embodiments are performed. The storage medium may be any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features in the technical solutions, as long as such modifications or replacements do not cause the essence of corresponding technical solutions to depart from the scope of the technical solutions of the embodiments of the present invention.

## Claims

1. An HTTP-based content acquisition method, comprising:
acquiring (101), by a client according to an acquired content identifier, a first content corresponding to the content identifier and a validity period of the first content from a cache;
displaying (102), by the client, the first content;
if a duration of caching the first content on the client exceeds the validity period, requesting (103), by the client, a server to verify validity of the first content while the first content is displayed;
requesting (104), by the client, to acquire a second content corresponding to the content identifier from the server if the validity verification performed by the server for the first content fails; and
displaying (105), by the client, the second content.

2. The method according to claim 1, wherein:
the step of acquiring (101), by a client according to an acquired content identifier, the first content corresponding to the content identifier and the validity period of the first content from the cache, specifically comprises:
acquiring, by the client according to the acquired content identifier, the first content corresponding to the content identifier and a validity period identifier of the first content from the cache; and
acquiring, by the client according to the validity period identifier of the first content, the validity period corresponding to the validity period identifier of the first content.

3. The method according to claim 1, wherein:
the step of acquiring (101), by the client according to an acquired content identifier, the first content corresponding to the content identifier and the validity period of the first content from the cache, specifically comprises:
acquiring, by the client according to the acquired content identifier, the first content corresponding to the content identifier from the cache; and
using, by the client, a preset validity period as the validity period of the first content.

4. The method according to any one of claims 1 to 3, wherein:
the step of displaying (105), by the client, the first content, specifically comprises:
displaying, by the client, the first content according to characteristic information of the first content.

5. The method according to any one of claims 1 to 3, wherein after the client displays the first content, the method further comprises:
re-acquiring, by the client, the first content corresponding to the content identifier after a preset time interval; and
displaying, by the client, the re-acquired first content.

6. A client, comprising:
a first acquiring module (41), configured to acquire, according to an acquired content identifier, a first content corresponding to the content identifier and a validity period of the first content from a cache;
a first displaying module (42), configured to display the first content;
a verification requesting module (43), configured to request, if a duration of caching the first content on the client exceeds the validity period, a server to verify validity of the first content while the first content is displayed by the first displaying module;
a second acquiring module (44), configured to request to acquire a second content corresponding to the content identifier from the server if the validity verification performed by the server for the first content fails; and
a second displaying module (45), configured to display the second content.

7. The client according to claim 6, wherein the first acquiring module (41) is specifically configured to:
acquire, according to the acquired content identifier, the first content corresponding to the content identifier and a validity period identifier of the first content from the cache, and acquire, according to the validity period identifier of the first content, the validity period corresponding to the validity period identifier of the first content.

8. The client according to claim 6, wherein the first acquiring module (41) is specifically configured to:
acquire, according to the acquired content identifier, the first content corresponding to the content identifier from the cache, and use a preset validity period as the validity period of the first content.

9. The client according to any one of claims 6 to 8, wherein the first displaying module (42) is specifically configured to:
display the first content according to characteristic information of the first content.

## Patentansprüche

1. HTTP-basiertes Inhaltserlangungsverfahren, aufweisend:
Erlangen (101) eines ersten Inhalts, der einem Inhaltsidentifizierer entspricht, und einer Gültigkeitsdauer des ersten Inhalts von einem Cache durch einen Client gemäß dem erlangten Inhaltsidentifizierer;
Anzeigen (102) des ersten Inhalts durch den Client;
wenn eine Zeitdauer des Zwischenspeicherns des ersten Inhalts auf dem Client die Gültigkeitsdauer überschreitet, Anfordern (103) eines Servers durch den Client, die Gültigkeit des ersten Inhalts zu verifizieren, während der erste Inhalt angezeigt wird;
Anfordern (104), einen zweiten Inhalt zu erlangen, der dem Inhaltsidentifizierer entspricht, vom Server durch den Client, wenn die Gültigkeitsüberprüfung, die vom Server für den ersten Inhalt durchgeführt wird, fehlschlägt; und
Anzeigen (105) des zweiten Inhalts durch den Client.

2. Verfahren nach Anspruch 1, wobei:
der Schritt des Erlangens (101) des ersten Inhalts, der einem Inhaltsidentifizierer entspricht, und der Gültigkeitsdauer des ersten Inhalts vom Cache durch einen Client gemäß dem erlangten Inhaltsidentifizierer speziell aufweist:
Erlangen des ersten Inhalts, der dem Inhaltsidentifizierer entspricht, und eines Gültigkeitsdaueridentifizierers des ersten Inhalts vom Cache durch den Client gemäß dem erlangten Inhaltsidentifizierer; und
Erlangen der Gültigkeitsdauer, die dem Gültigkeitsdaueridentifizierer des ersten Inhalts entspricht, durch den Client gemäß dem Gültigkeitsdaueridentifizierer des ersten Inhalts.

3. Verfahren nach Anspruch 1, wobei:
der Schritt des Erlangens (101) des ersten Inhalts, der einem Inhaltsidentifizierer entspricht, und der Gültigkeitsdauer des ersten Inhalts vom Cache durch den Client gemäß dem erlangten Inhaltsidentifizierer speziell aufweist:
Erlangen des ersten Inhalts, der dem Inhaltsidentifizierer entspricht, vom Cache durch den Client gemäß dem erlangten Inhaltsidentifizierer; und
Verwenden einer voreingestellten Gültigkeitsdauer als die Gültigkeitsdauer des ersten Inhalts durch den Client.

4. Verfahren nach einem der Ansprüche 1 bis 3, wobei:
der Schritt des Anzeigens (105) des ersten Inhalts durch den Client speziell aufweist: Anzeigen des ersten Inhalts gemäß charakteristischen Informationen des ersten Inhalts durch den Client.

5. Verfahren nach einem der Ansprüche 1 bis 3, wobei, nachdem der Client den ersten Inhalt anzeigt, das Verfahren ferner aufweist:
Wiedererlangen des ersten Inhalts, der dem Inhaltsidentifizierer entspricht, nach einem voreingestellten Zeitintervall durch den Client; und
Anzeigen des wiedererlangten ersten Inhalts durch den Client.

6. Client, aufweisend:
ein erstes Erlangungsmodul (41), das konfiguriert ist, gemäß einem erlangten Inhaltsidentifizierer einen ersten Inhalt, der dem Inhaltsidentifizierer entspricht, und eine Gültigkeitsdauer des ersten Inhalts von einem Cache zu erlangen;
ein erstes Anzeigemodul (42), das konfiguriert ist, den ersten Inhalt anzuzeigen;
ein Überprüfungsanforderungsmodul (43), das konfiguriert ist, einen Server anzufordern, die Gültigkeit des ersten Inhalts zu verifizieren, während der erste Inhalt durch das erste Anzeigemodul angezeigt wird, wenn eine Zeitdauer des Zwischenspeicherns des ersten Inhalts auf dem Client die Gültigkeitsdauer überschreitet;
ein zweites Erlangungsmodul (44), das konfiguriert ist, vom Server anzufordern, einen zweiten Inhalt zu erlangen, der dem Inhaltsidentifizierer entspricht, wenn die Gültigkeitsüberprüfung, die durch den Server für den ersten Inhalt durchgeführt wird, fehlschlägt; und
ein zweites Anzeigemodul (45), das konfiguriert ist, den zweiten Inhalt anzuzeigen.

7. Client nach Anspruch 6, wobei das erste Erlangungsmodul (41) speziell konfiguriert ist:
gemäß dem erlangten Inhaltsidentifizierer den ersten Inhalt, der dem Inhaltsidentifizierer entspricht, und einen Gültigkeitsdaueridentifizierer des ersten Inhalts vom Cache zu erlangen und gemäß dem Gültigkeitsdaueridentifizierer des ersten Inhalts die Gültigkeitsdauer, die dem Gültigkeitsdaueridentifizierer des ersten Inhalts entspricht, zu erlangen.

8. Client nach Anspruch 6, wobei das erste Erlangungsmodul (41) speziell konfiguriert ist:
gemäß dem erlangten Inhaltsidentifizierer den ersten Inhalt, der dem Inhaltsidentifizierer entspricht, vom Cache zu erlangen und eine voreingestellte Gültigkeitsdauer als die Gültigkeitsdauer des ersten Inhalts zu verwenden.

9. Client nach einem der Ansprüche 6 bis 8, wobei das erste Anzeigemodul (42) speziell konfiguriert ist:
den ersten Inhalt gemäß charakteristischen Informationen des ersten Inhalts anzuzeigen.

## Revendications

1. Procédé d'acquisition de contenu à base de HTTP, comprenant les étapes consistant à:
acquérir (101), par un client en fonction d'un identifiant de contenu acquis, un premier contenu correspondant à l'identifiant de contenu et une période de validité du premier contenu à partir d'une mémoire cache ;
afficher (102), par le client, le premier contenu ;
si une durée de mise en mémoire cache du premier contenu sur le client dépasse la période de validité, demander (103), par le client, à un serveur de vérifier la validité du premier contenu pendant que le premier contenu est affiché ;
demander (104), par le client, d'acquérir un second contenu correspondant à l'identifiant de contenu à partir du serveur si la vérification de validité exécutée par le serveur pour le premier contenu échoue ; et
afficher (105), par le client, le second contenu.

2. Procédé selon la revendication 1, dans lequel :
l'étape d'acquisition (101), par un client en fonction d'un identifiant de contenu acquis, du premier contenu correspondant à l'identifiant de contenu et de la période de validité du premier contenu à partir de la mémoire cache, consiste spécifiquement à :
acquérir, par le client en fonction de l'identifiant de contenu acquis, le premier contenu correspondant à l'identifiant de contenu et un identifiant de période de validité du premier contenu à partir de la mémoire cache ; et
acquérir, par le client en fonction de l'identifiant de période de validité du premier contenu, la période de validité correspondant à l'identifiant de période de validité du premier contenu.

3. Procédé selon la revendication 1, dans lequel :
l'étape d'acquisition (101), par le client en fonction d'un identifiant de contenu acquis, du premier contenu correspondant à l'identifiant de contenu et de la période de validité du premier contenu à partir de la mémoire cache, consiste spécifiquement à :
acquérir, par le client en fonction de l'identifiant de contenu acquis, le premier contenu correspondant à l'identifiant de contenu à partir de la mémoire cache ; et
utiliser, par le client, une période de validité prédéfinie en tant que période de validité du premier contenu.

4. Procédé selon l'une quelconque des revendications 1 à 3, dans lequel :
l'étape consistant à afficher (105), par le client, le premier contenu, consiste spécifiquement à :
afficher, par le client, le premier contenu en fonction des informations de caractéristiques du premier contenu.

5. Procédé selon l'une quelconque des revendications 1 à 3, dans lequel, après que le client affiche le premier contenu, le procédé consiste en outre à :
acquérir de nouveau, par le client, le premier contenu correspondant à l'identifiant de contenu après un intervalle de temps prédéfini ; et
afficher, par le client, le premier contenu acquis de nouveau.

6. Client, comprenant :
un premier module d'acquisition (41), conçu pour acquérir, en fonction d'un identifiant de contenu acquis, un premier contenu correspondant à l'identifiant de contenu et une période de validité du premier contenu à partir d'une mémoire cache ;
un premier module d'affichage (42), conçu pour afficher le premier contenu ;
un module de demande de vérification (43), conçu pour demander, si une durée de mise en mémoire cache du premier contenu sur le client dépasse la période de validité, à un serveur de vérifier la validité du premier contenu pendant que le premier contenu est affiché par le premier module d'affichage ;
un second module d'acquisition (44), conçu pour demander d'acquérir un second contenu correspondant à l'identifiant de contenu à partir du serveur si la vérification de validité exécutée par le serveur pour le premier contenu échoue ; et
un second module d'affichage (45), conçu pour afficher le second contenu.

7. Client selon la revendication 6, dans lequel le premier module d'acquisition (41) est conçu spécifiquement pour :
acquérir, en fonction de l'identifiant de contenu acquis, le premier contenu correspondant à l'identifiant de contenu et un identifiant de période de validité du premier contenu à partir de la mémoire cache, et
acquérir, en fonction de l'identifiant de période de validité du premier contenu, la période de validité correspondant à l'identifiant de période de validité du premier contenu.

8. Client selon la revendication 6, dans lequel le premier module d'acquisition (41) est conçu spécifiquement pour :
acquérir, en fonction de l'identifiant de contenu acquis, le premier contenu correspondant à l'identifiant de contenu à partir de la mémoire cache, et utiliser une période de validité prédéfinie en tant que période de validité du premier contenu.

9. Client selon l'une quelconque des revendications 6 à 8, dans lequel le premier module d'affichage (42) est conçu spécifiquement pour :
afficher le premier contenu en fonction des informations de caractéristiques du premier contenu.
